# EUROPÄISCHE PATENTSCHRIFT

(11) **EP 3 481 556 B1**
(45) Veröffentlichungstag und Bekanntmachung des Hinweises auf die Patenterteilung: **08.07.2020**
(21) Anmeldenummer: 16763431.0
(22) Anmeldetag: 31.08.2016
(51) Int. Cl.: B02C 19/18, H02J 7/00

(54) **VERFAHREN ZUM BETRIEB EINER HOCHSPANNUNGSIMPULSANLAGE**
METHOD FOR OPERATING A HIGH-VOLTAGE PULSE SYSTEM
PROCÉDÉ PERMETTANT DE FAIRE FONCTIONNER UN SYSTÈME DE GÉNÉRATION D'IMPULSIONS HAUTE TENSION

(43) Veröffentlichungstag der Anmeldung: 15.05.2019
(73) Patentinhaber: Selfrag AG, 3210 Kerzers (CH)
(72) Erfinder: KALKE, Jürgen, 3225 Müntschemier (CH); MÜLLER-SIEBERT, Reinhart, 3013 Bern (CH)
(74) Vertreter: Münch, Martin Walter
(86) Internationale Anmeldenummer: PCT/CH2016/000113
(87) Internationale Veröffentlichungsnummer: WO 2018/039807

(56) Entgegenhaltungen:
- GB-A- 1 047 730
- US-A- 4 653 697
- US-A- 6 039 274

## Beschreibung

### TECHNISCHES GEBIET

Die Erfindung betrifft ein Verfahren zum Betrieb einer Hochspannungsimpulsanlage, insbesondere einer Hochspannungsimpulsanlage zur Fragmentierung und/oder Schwächung von Material mittels Hochspannungsentladungen, eine Anlage zur Durchführung des Verfahrens sowie eine Verwendung der Anlage gemäss den Oberbegriffen der unabhängigen Patentansprüche.

### STAND DER TECHNIK

Bei Hochspannungsimpulsanlagen, wie sie beispielsweise für die elektrodynamische Fragmentierung von Material mittels Hochspannungsentladungen eingesetzt werden, müssen aus Sicherheitsgründen die Energiespeicher, zumeist Kondensatoren, entladen und kurzgeschlossen bzw. geerdet sein, wenn Personen in die Nähe von im Betrieb hochspannungsführenden Teilen kommen können. Dies betrifft insbesondere auch regelmässige Wartungsarbeiten an solchen Anlagen, wie z.B. das regelmässige Austauschen der Arbeitselektroden bei elektrodynamischen Fragmentierungsanlagen.

Das Kurzschliessen bzw. Erden der Energiespeicher wird typischerweise über einen Kurzschluss- bzw. Erdungsschalter bewerkstelligt, der gleichzeitig auch den Energiespeicher entlädt. Damit der Schalter durch den kurzfristig recht hohen Strom nicht beschädigt wird, wird der Strom durch einen in Serie zum Schalter angeschlossenen Widerstand begrenzt.

Impulsanlagen zur Fragmentierung von Material sind beispielsweise aus US 4,653,697 und US 6,039,274 bekannt. Beim Nähern der beiden Schalterkontakte bildet sich unweigerlich ein Lichtbogen aus. Die Stärke und Zeitdauer des Lichtbogens ist abhängig von der Spannung im Energiespeicher. Aus Isolationsgründen sind die Energiespeicher in Öl eingetaucht. Ist der Kurzschluss- bzw. Erdungsschalter ebenfalls im Öl platziert, entstehen Lichtbögen im Öl. Diese verbrennen das Öl. Die Brandprodukte verschlechtern mit der Zeit die Isolationseigenschaften des Öls, was am Ende zu einem Versagen der elektrischen Isolation führen kann.

Um dies zu vermeiden, befinden sich die Kontakte des Kurzschluss- bzw. Erdungsschalters üblicherweise in einem Gasvolumen, welches wiederum in Öl platziert ist. Dieses Konzept lässt sich jedoch nur bis zu einem Spannungsniveau von ungefähr 50 kV einsetzen, weil oberhalb dieser Spannung die Baugrösse des Schalters wie auch des in Reihe geschalteten Widerstands überproportional zunimmt, was nicht nur zu hohen Kosten und dem Erfordernis einer sehr grossen Menge von Isolieröl führt, sondern auch bestimmte für diesen Spannungsbereich bevorzugte Anlagengeometrien praktisch verunmöglicht.

### DARSTELLUNG DER ERFINDUNG

Es stellt sich daher die Aufgabe, eine technische Lösung zur Verfügung zu stellen, welche die zuvor erwähnten Nachteile des Standes der Technik nicht aufweist oder diese zumindest teilweise zu vermeiden hilft.

Diese Aufgabe wird durch das Verfahren und die Anlage gemäss den unabhängigen Patentansprüchen gelöst.

Gemäss diesen betrifft ein erster Aspekt der Erfindung ein Verfahren zum Betrieb einer Hochspannungsimpulsanlage, bevorzugterweise zur Fragmentierung und/- oder Schwächung von Material mittels Hochspannungsentladungen. Diese Anlage weist einen oder mehrere Energiespeicher auf, zur Bereitstellung der Energie für die Hochspannungsimpulse, sowie ein oder mehrere Ladegeräte zum Laden des oder der Energiespeicher.

Im bestimmungsgemässen Hochspannungsimpulsbetrieb wird mit der Anlage eine Abfolge von Hochspannungsimpulsen erzeugt. Dabei wird der oder werden die Energiespeicher bei jedem Hochspannungsimpuls im Wesentlichen vollständig entladen und erst nach dem Ablauf einer Ladepause durch Zuführung von Ladeenergie mit dem oder den Ladegeräten für den nächsten Hochspannungsimpuls wieder aufgeladen.

Durch das erfindungsgemässe Betriebsverfahren wird jeweils zwischen zwei aufeinanderfolgenden Hochspannungsimpulsen ein Zeitfenster geschaffen, in dem der bzw. die Energiespeicher praktisch vollständig entleert sind und keine Ladespannung anliegt.

Hierdurch wird es, wie es gemäss einer bevorzugten Ausführungsform des Verfahrens vorgesehen ist, möglich, den oder die Energiespeicher in einem solchen spannungsfreien Zeitfenster (Ladepause) kurzzuschliessen bzw, zu erden, ohne dass dabei ein Kurzschluss- oder Erdungsstrom fliesst, um die Anlage vom bestimmungsgemässen Hochspannungsimpulsbetrieb in einen Nicht-Betriebszustand zu überführen, in welchem der oder die Energiespeicher der Hochspannungsimpulsanlage entladen ist oder sind und durch Kurzschliessen bzw. Erden gegen ein unbeabsichtigtes Laden gesichert ist oder sind.

Auf diese Weise kann die Bildung eines Lichtbogens beim Kurzschliessen bzw. Erden des oder der Energiespeicher vollständig verhindert werden, was den Bau von diesbezüglich praktisch verschleissfreien Anlagen ermöglicht. Entsprechend kann auch, wie es gemäss einer bevorzugten Ausführungsform des Verfahrens vorgesehen ist, auf die Verwendung eines Kurzschluss- oder Erdungswiderstands beim Kurzschliessen bzw. Erden des oder der Energiespeicher verzichtet werden.

Weiter wird es durch die erfindungsgemässe Betriebsweise möglich, auch in Spannungsbereichen weit oberhalb von 50kV auf bewährte und kompakte Anlagenkonzepte zurückzugreifen.

Mit Vorteil wird nach dem Kurzschliessen bzw. Erden des oder der Energiespeicher keine Ladeenergie mehr mit dem oder den Ladegeräten zu dem oder den kurzgeschlossenen und/oder geerdeten Energiespeichern zugeführt. Hierdurch ergibt sich der Vorteil, dass es nicht zu einem Kurzschliessen bzw. Erden des oder der Ladegeräte kommt, mit entsprechender Belastung des oder der Ladegeräte und einem damit verbundenen Energieverlust.

Bevorzugterweise erfolgt das Kurzschliessen bzw. Erden des oder der Energiespeicher mittels Kurzschluss- oder Erdungsschaltern. Hierdurch ergibt sich der Vorteil, dass sich dieses auf einfache Weise automatisieren lässt. Dabei ist es aus Sicherheitsgründen weiter bevorzugt, dass das Kurzschliessen bzw. Erden mittels mindestens zweier Kurzschluss- oder Erdungsschalter pro Energiespeicher erfolgt.

Sind die Kontakte des oder der Kurzschluss- oder Erdungsschalter in Öl angeordnet, was bevorzugt ist, mit Vorteil in einem gemeinsamen ölbefüllten Behältnis zusammen mit dem oder den Energiespeichern, so werden besonders kompakte Anlagen möglich.

Weiter ist es bevorzugt, dass der Schaltzustand des jeweiligen Kurzschluss- oder Erdungsschalters mittels eines Sensors und/oder einer optischen Schaltzustandsanzeige überwacht wird. Hierdurch lässt sich die Sicherheit weiter verbessern.

Auch ist es von Vorteil, dass der jeweilige Kurzschluss- oder Erdungsschalter im geschlossenen Zustand, d.h. wenn dieser den oder die Energiespeicher kurzschliesst bzw. erdet, mechanisch verriegelt und/oder abgeschlossen wird. Hierdurch kann ein unbeabsichtigtes Aufheben des Kurzschliessens oder Erdens sicher verhindert werden.

Mit Vorteil werden bei dem erfindungsgemässen Verfahren im bestimmungsgemässen Hochspannungsimpulsbetrieb Hochspannungsimpulse mit einer Spannung von mehr als 50 kV, bevorzugterweise von mehr als 100 kV, erzeugt, und zwar bevorzugterweise mit einer Abfolgefrequenz von mehr als 1 Hz, noch bevorzugter von mehr als 5 Hz.

Bei derartigen Spannungen und Abfolgefrequenzen treten die Vorteile der Erfindung besonders deutlich zu Tage.

Ein zweiter Aspekt der Erfindung betrifft eine Hochspannungsimpulsanlage zur Durchführung des Verfahrens gemäss dem ersten Aspekt der Erfindung.

Diese Anlage umfasst einen oder mehrere Energiespeicher zur Bereitstellung der Energie für die Hochspannungsimpulse sowie ein oder mehrere Ladegeräte zum Laden des oder der Energiespeicher.

Weiter umfasst die Anlage einen oder mehrere Kurzschluss- oder Erdungsschalter, zum Sichern des oder der Energiespeicher durch Kurzschliessen bzw. Erden gegen ein unbeabsichtigtes Aufladen.

Auch umfasst die Anlage Einrichtungen zur Steuerung der Anlage, mit denen die Anlage derartig steuerbar ist, dass sie im bestimmungsgemässen Hochspannungsimpulsbetrieb eine Abfolge von Hochspannungsimpulsen erzeugt, wobei der oder die Energiespeicher bei jedem Hochspannungsimpuls im Wesentlichen vollständig entladen wird oder werden und erst nach dem Ablauf einer Ladepause durch Zuführung von Ladeenergie mit dem oder den Ladegeräten für den nächsten Hochspannungsimpuls wieder aufgeladen wird oder werden.

Die erfindungsgemässe Anlage ermöglicht einen bestimmungsgemässen Hochspanungsimpulsbetrieb bei dem jeweils zwischen zwei aufeinanderfolgenden Hochspannungsimpulsen ein Zeitfenster vorhanden ist, in dem der bzw. die Energiespeicher praktisch vollständig entleert sind und keine Ladespannung daran anliegt.

Hierdurch wird es möglich, den oder die Energiespeicher in einem solchen spannungsfreien Zeitfenster (Ladepause) kurzzuschliessen bzw. zu erden und die Anlage so, ohne dass dabei ein Kurzschluss- oder Erdungsstrom fliesst, vom bestimmungsgemässen Hochspannungsimpulsbetrieb in einen Nicht-Betriebszustand zu überführen, in welchem der oder die Energiespeicher der Hochspannungsimpulsanlage entladen ist oder sind und durch Kurzschliessen bzw. Erden gegen ein unbeabsichtigtes Laden gesichert ist oder sind.

Hierzu sind in einer bevorzugten Ausführungsform der Anlage die Eirichtungen zur Steuerung der Anlage derartig ausgebildet, dass auf einen Stoppbefehl hin die Anlage durch Schliessen des oder der Kurzschluss- oder Erdungsschalter in einer auf den Stoppbefehl folgenden Ladepause in einen Nicht-Betriebszustand überführbar ist, in welchem der oder die Energiespeicher der Hochspannungsimpulsanlage entladen sowie kurzgeschlossen bzw. geerdet ist oder sind und dadurch gegen ein unbeabsichtigtes Laden gesichert ist oder sind.

Entsprechend kann die Bildung eines Lichtbogens beim Kurzschliessen bzw. Erden des oder der Energiespeicher vollständig verhindert werden, mit den bereits unter dem ersten Aspekt der Erfindung erwähnten Vorteilen.

Mit Vorteil sind die Einrichtungen zur Steuerung der Anlage dabei derartig ausgebildet, dass nach dem Kurzschliessen bzw. Erden des oder der Energiespeicher keine Ladeenergie mehr mit dem oder den Ladegeräten zu dem oder den kurzgeschlossenen bzw. geerdeten Energiespeichern zugeführt wird. Hierdurch ergibt sich der Vorteil, dass es nicht zu einem Kurzschliessen bzw. Erden des oder der Ladegeräte kommt, mit entsprechender Belastung des oder der Ladegeräte und einem damit verbundenen Energieverlust.

Aus Sicherheitsgründen ist es weiter bevorzugt, dass die Anlage mindestens zwei Kurzschluss- bzw. Erdungsschalters pro Energiespeicher aufweist, zum Kurzschliessen bzw. Erden des oder der Energiespeicher.

Auch ist es bevorzugt, dass die Kontakte des oder der Kurzschluss- bzw. Erdungsschalter in Öl angeordnet sind, bevorzugterweise in einem gemeinsamen ölbefüllten Behältnis zusammen mit dem oder den Energiespeichern. Auf diese Weise werden besonders kompakte Anlagen möglich.

Weiter ist es bevorzugt, dass die Einrichtungen zur Steuerung der Anlage einen Sensor zur Überwachung des Schaltzustands des Kurzschluss- oder Erdungsschalters aufweisen und/oder eine optische Schaltzustandsanzeige vorhanden ist, zur visuellen Überwachung des Schaltzustands des Kurzschluss- oder Erdungsschalters. Hierdurch lässt sich die Sicherheit der Anlage weiter verbessern.

Des Weiteren ist es von Vorteil, wenn die Anlage Einrichtungen aufweist mit denen der jeweilige Kurzschluss- oder Erdungsschalter im geschlossenen Zustand, d.h. wenn dieser den oder die Energiespeicher kurzschliesst bzw. erdet, mechanisch verriegelt und/oder abgeschlossen werden kann. Hierdurch lässt sich ein unbeabsichtigtes Aufheben des Kurzschliessens oder Erdens sicher verhindern.

Ebenfalls bevorzugt ist es, wenn der oder die Kurzschluss- oder Erdungsschalter der Anlage im unbetätigten bzw. betätigungsenergiefreien Zustand geschlossen ist oder sind. Hierdurch lässt sich die Sicherheit der Anlage weiter verbessern, weil der oder die Energiespeicher der Anlage bei einem Ausfall der Betätigungsenergie für die Kurzschluss- oder Erdungsschalter (z.B. elektrischer Strom oder Druckluft) automatisch kurzgeschlossen bzw. geerdet werden.

Mit Vorteil ist die erfindungsgemässe Hochspannungsimpulsanlage derartig ausgebildet, dass mit ihr im bestimmungsgemässen Hochspannungsimpulsbetrieb Hochspannungsimpulse mit einer Spannung von mehr als 50 kV, bevorzugterweise von mehr als 100 kV, erzeugt werden können, und zwar bevorzugterweise mit einer Abfolgefrequenz von mehr als 1 Hz, noch bevorzugter von mehr als 5 Hz.

Bei derartigen Anlagen treten die Vorteile der Erfindung besonders deutlich zu Tage.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 das Schaltschema einer ersten erfindungsgemässen Hochspannungsimpulsanlage zur Fragmentierung von Material mittels Hochspanungsimpulsen;
Fig. 2 den Spannungsverlauf des Energiespeichers der Anlage aus Fig. 1 im bestimmungsgemässen Hochspannungsimpulsbetrieb; und
Fig. 3 das Schaltschema einer zweiten erfindungsgemässen Hochspannungsimpulsanlage zur Fragmentierung von Material mittels Hochspanungsimpulsen.

### WEGE ZUR AUSFÜHRUNG DER ERFINDUNG

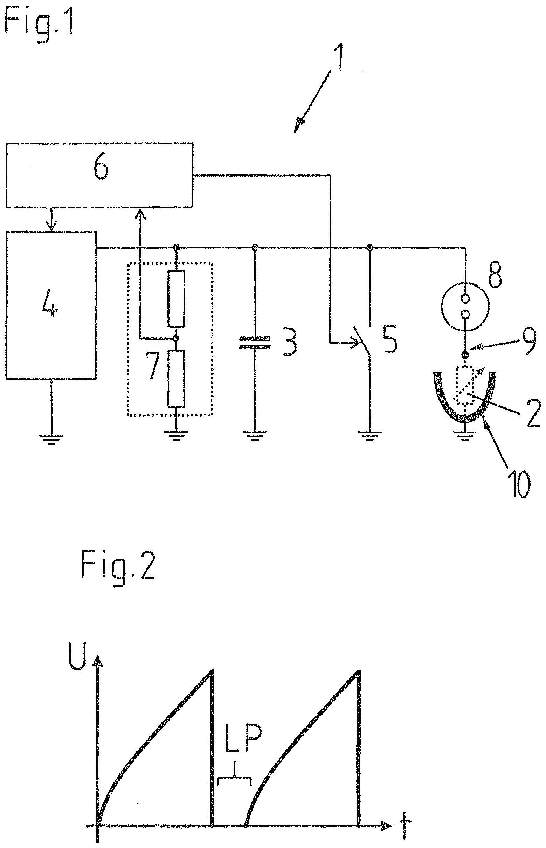

Fig. 1 zeigt das Anlagenschema einer erfindungsgemässen Hochspannungsimpulsanlage 1 zur elektrodynamischen Fragmentierung von Gesteinsmaterial 2 mittels Hochspannungsentladungen.

Die Anlage 1 umfasst einen Energiespeicher in Form eines Kondensators 3 zur Bereitstellung der Energie für die Hochspannungsimpulse sowie ein Ladegerät 4 zum Laden des Kondensators 3, einen Ausgangsschalter in Form einer Funkenstrecke 8 sowie eine Hochspannungselektrode 9, welche in einem mit einer Prozessflüssigkeit (Wasser) gefluteten Prozessgefäss einer vom Prozessgefässboden gebildeten und geerdeten Gegenelektrode 10 mit einem Abstand gegenübersteht. Zwischen der Hochspannungselektrode 9 und der Gegenelektrode 10 ist, eingetaucht in die Prozessflüssigkeit, das zu fragmentierende Material 2 angeordnet, derart, dass die im bestimmungsgemässen Hochspannungsimpulsbetrieb der Anlage zwischen den beiden Elektroden 9, 10 erzeugten Hochspannungsentladungen (anspruchsgemässe Hochspannungsimpulse) durch das Material 2 hindurch stattfinden, welches als veränderlicher Lastwiderstand dargestellt ist.

Des Weiteren umfasst die Anlage 1 eine Anlagensteuerung 6 mit einer Spannungsmesseinrichtung 7, und ein Erdungsschalter 5 für den Kondensator 3.

Im bestimmungsgemässen Fragmentierungsbetrieb (anspruchsgemässer Hochspannungsimpulsbetrieb) erzeugt die Anlage 1 eine Abfolge von Hochspannungsentladungen zwischen den Elektroden 9, 10 durch das Material 2 hindurch. Dabei wird der Kondensator 3 bei jeder Hochspannungsentladung vollständig entladen.

Der Verlauf der Spannung U des Kondensators 3 über der Zeit t im bestimmungsgemässen Fragmentierungsbetrieb ist in Fig. 2 dargestellt, und zwar über zwei Ladezyklen hinweg. Dabei beträgt die Spannung U zum Zeitpunkt des Entladungsbeginns etwa 100 kV, und jeder Ladezyklus inklusive zugehöriger Ladepause LP dauert etwa 300 ms.

Die Anlagensteuerung 6 detektiert mit ihrer Spannungsmesseinrichtung 7 den Zusammenbruch der Spannung U des Kondensators 3 bei der jeweiligen Hochspannungsentladung und steuert das Ladegerät 4 derartig, dass im Anschluss an die jeweilige Entladung eine Ladepause (LP) folgt, in welcher das Ladegerät 4 keine Ladeenergie liefert. Erst nach Ablauf der Ladepause LP wird der Kondensator 3 wieder über das Ladegerät 4 geladen, damit er die Energie für die nächste Hochspannungsentladung bereitstellen kann.

Soll die Anlage 1 vom bestimmungsgemässen Fragmentierungsbetrieb in einen Nicht-Betriebszustand überführt werden, in welchem der Kondensator 3 entladen und durch Kurzschliessen bzw. Erden gegen ein unbeabsichtigtes Laden gesichert ist, so schliesst die Anlagensteuerung 6 auf einen Stoppbefehl hin in einer auf den Stoppbefehl folgenden Ladepause LP den Erdungsschalter 5 und steuert das Ladegerät 4 derartig, dass dieses nach dem Erden des Energiespeichers 3 keine Ladeenergie mehr für den Energiespeicher 3 bereitstellt.

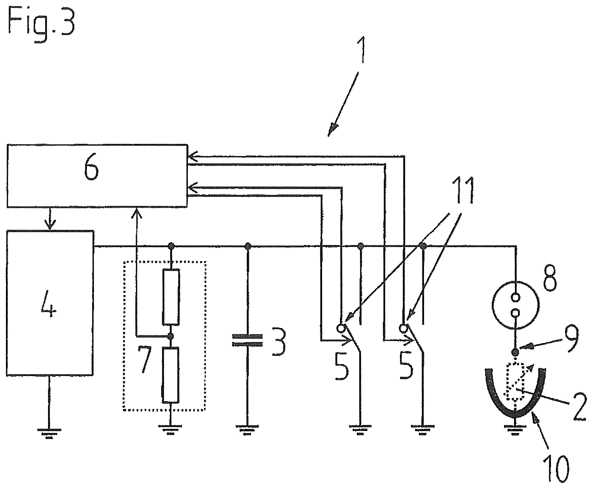

Fig. 3 zeigt das Schaltschema einer zweiten erfindungsgemässen Hochspannungsimpulsanlage zur Fragmentierung von Material mittels Hochspanungsimpulsen, welche sich von der in Fig. 1 dargestellten Anlage lediglich dadurch unterscheidet, dass sie zwei Erdungsschalter 5 für den Kondensator 3 aufweist und dass der Schaltzustand jedes Erdungsschalters 5 mittels eines Sensors 11 von der Anlagensteuerung 6 überwacht wird.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Verfahren zum Betrieb einer Hochspannungsimpulsanlage (1), insbesondere zur Fragmentierung und/- oder Schwächung von Material (2) mittels Hochspannungsentladungen, mit einem Energiespeicher (3) zur Bereitstellung der Energie für die Hochspannungsimpulse und einem Ladegerät (4) zum Laden des Energiespeichers (3),
wobei mit der Anlage (1) im bestimmungsgemässen Hochspannungsimpulsbetrieb eine Abfolge von Hochspannungsimpulsen erzeugt wird und dabei der Energiespeicher (3) bei jedem Hochspannungsimpuls vollständig entladen und erst nach dem Ablauf einer Ladepause (LP) durch Zuführung von Ladeenergie mit dem Ladegerät (4) für den nächsten Hochspannungsimpuls wieder geladen wird,
und wobei der Energiespeicher (3) beim Überführen der Anlage (1) vom bestimmungsgemässen Hochspannungsimpulsbetrieb in einen Nicht-Betriebszustand, in welchem der Energiespeicher (3) der Hochspanungsimpulsanlage (1) entladen ist und gegen ein unbeabsichtigtes Laden gesichert ist, in einer Ladepause (LP) kurzgeschlossen und/oder geerdet wird.

2. Verfahren nach Anspruch 1, wobei nach dem Kurzschliessen und/oder Erden des Energiespeichers (3) keine Ladeenergie mehr mit dem Ladegerät (4) zum kurzgeschlossenen und/oder geerdeten Energiespeicher (3) zugeführt wird.

3. Verfahren nach einem der vorangehenden Ansprüche, wobei das Kurzschliessen und/oder Erden des Energiespeichers (3) mittels eines Kurzschluss- oder Erdungsschalters (5) erfolgt, insbesondere mittels mindestens zweier Kurzschluss- oder Erdungsschalter.

4. Verfahren nach Anspruch 3, wobei die Kontakte des oder der Kurzschluss- oder Erdungsschalter (5) in Öl angeordnet sind, insbesondere in einem gemeinsamen ölbefüllten Behältnis zusammen mit dem Energiespeicher (3) .

5. Verfahren nach einem der Ansprüche 3 bis 4, wobei der Schaltzustand des oder der Kurzschluss- oder Erdungsschalter (5) mittels eines oder mehrerer Sensoren (11) überwacht wird.

6. Verfahren nach einem der Ansprüche 3 bis 5, wobei der Schaltzustand des oder der Kurzschluss- oder Erdungsschalter (5) mittels einer optischen Schaltzustandsanzeige überwacht wird.

7. Verfahren nach einem der Ansprüche 3 bis 6, wobei der oder die Kurzschluss- oder Erdungsschalter (5) im geschlossenen Zustand mechanisch verriegelt und/- oder abgeschlossen wird oder werden.

8. Verfahren nach einem der vorangehenden Ansprüche, wobei im bestimmungsgemässen Hochspannungsimpulsbetrieb Hochspannungsimpulse mit einer Spannung von mehr als 50 kV, insbesondere von mehr als 100 kV, erzeugt werden.

9. Verfahren nach einem der vorangehenden Ansprüche, wobei im bestimmungsgemässen Hochspannungsimpulsbetrieb Hochspannungsimpulse mit einer Abfolgefrequenz von mehr als 1 Hz, insbesondere von mehr als 5 Hz erzeugt werden.

10. Verfahren nach einem der vorangehenden Ansprüche, wobei das Kurzschliessen und/oder Erden des Energiespeichers (3) ohne Verwendung eines Kurzschluss- oder Erdungswiderstands erfolgt.

11. Hochspannungsimpulsanlage (1) zur Durchführung des Verfahrens nach einem der vorangehenden Ansprüche, umfassend:
a) einen Energiespeicher (3) zur Bereitstellung der Energie für die Hochspannungsimpulse,
b) ein Ladegerät (4) zum Laden des Energiespeichers (3),
c) einen oder mehrere Kurzschluss- oder Erdungsschalter (5), zum Sichern des Energiespeichers (3) durch Kurzschliessen und/oder Erden gegen ein unbeabsichtigtes Laden und
d) Einrichtungen (6, 7) zur Steuerung der Anlage (1),
wobei die Anlage (1) mit den Einrichtungen (6, 7) zur Steuerung der Anlage (1) derartig steuerbar ist, dass sie im bestimmungsgemässen Hochspannungsimpulsbetrieb eine Abfolge von Hochspannungsimpulsen erzeugt und dabei der Energiespeicher (3) bei jedem Hochspannungsimpuls vollständig entladen und erst nach dem Ablauf einer Ladepause (LP) durch Zuführung von Ladeenergie mit dem Ladegerät (4) für den nächsten Hochspannungsimpuls wieder geladen wird.

12. Anlage (1) nach Anspruch 11, wobei die Einrichtungen (6, 7) zur Steuerung der Anlage (1) derartig ausgebildet sind, dass auf einen Stoppbefehl hin die Anlage (1) durch Schliessen des oder der Kurzschluss- oder Erdungsschalter (5) in einer auf den Stoppbefehl folgenden Ladepause (LP) in einen Nicht-Betriebszustand überführbar ist, in welchem der Energiespeicher (3) der Hochspannungsimpulsanlage (1) entladen ist und durch Kurzschliessen bzw. Erden gegen ein unbeabsichtigtes Laden gesichert ist.

13. Anlage (1) nach Anspruch 12, wobei die Einrichtungen (6, 7) zur Steuerung der Anlage (1) derartig ausgebildet sind, dass nach dem Kurzschliessen und/- oder Erden des Energiespeichers (3) keine Ladeenergie mehr mit dem Ladegerät (4) zum kurzgeschlossenen und/oder geerdeten Energiespeicher (3) zugeführt wird.

14. Anlage (1) nach einem der Ansprüche 11 bis 13, wobei die Anlage (1) mindestens zwei Kurzschluss- oder Erdungsschalter aufweist.

15. Anlage (1) nach einem der Ansprüche 11 bis 14, wobei die Kontakte des oder der Kurzschluss- oder Erdungsschalter (5) in Öl angeordnet sind, insbesondere in einem gemeinsamen ölbefüllten Behältnis zusammen mit dem Energiespeicher (3).

16. Anlage (1) nach einem der Ansprüche 11 bis 15, wobei die Anlage (1) einen oder mehrere Sensoren (11) zur Überwachung des Schaltzustands des oder der Kurzschluss- oder Erdungsschalter (5) aufweist.

17. Anlage (1) nach einem der Ansprüche 11 bis 16, wobei die Anlage (1) eine optische Schaltzustandsanzeige aufweist, zur visuellen Überwachung des Schaltzustands des oder der Kurzschluss- oder Erdungsschalter (5).

18. Anlage (1) nach einem der Ansprüche 11 bis 17, wobei die Anlage (1) Einrichtungen aufweist zum mechanischen Verriegeln und/oder Abschliessen des oder der Kurzschluss- oder Erdungsschalter (5) im geschlossenen Zustand.

19. Anlage (1) nach einem der Ansprüche 11 bis 18, wobei der oder die Kurzschluss- oder Erdungsschalter (5) im unbetätigten bzw. betätigungsenergiefreien Zustand geschlossen ist oder sind.

20. Anlage (1) nach einem der Ansprüche 11 bis 19, wobei die Anlage (1) derartig ausgebildet ist, dass mit ihr im bestimmungsgemässen Hochspannungsimpulsbetrieb Hochspannungsimpulse mit einer Spannung von mehr als 50 kV, insbesondere von mehr als 100 kV, erzeugt werden können.

21. Anlage (1) nach einem der Ansprüche 11 bis 20, wobei die Anlage (1) derartig ausgebildet ist, dass mit ihr im bestimmungsgemässen Hochspannungsimpulsbetrieb Hochspannungsimpulse mit einer Abfolgefrequenz von mehr als 1 Hz, insbesondere von mehr als 5 Hz erzeugt werden können.

22. Verwendung der Hochspannungsimpulsanlage (1) nach einem der Ansprüche 11 bis 21 zur Fragmentierung von insbesondere elektrisch schlecht leitendem Material (2) oder Materialverbünden, insbesondere von Beton, Felsgestein, Erzgestein oder Schlacke mittels von der Anlage (1) erzeugten Hochspannungsimpulsen.

## Claims

1. Method for operating a high voltage pulse device (1), in particular for fragmenting and/or weakening material (2) by means of high voltage discharges, with an energy storage device (3) for providing the energy for the high voltage pulses and a charging device (4) for charging the energy storage device (3),
wherein a sequence of high voltage pulses is generated with the device (1) in the intended high voltage pulse operation mode and whereby the energy storage device (3) is completely discharged with each high voltage pulse and is only recharged for the next high voltage pulse after the end of a charging pause (LP) by supplying charging energy with the charging device (4),
and wherein the energy storage device (3) is short-circuited and/or earthed in a charging pause (LP) when the device (1) is transferred from the intended high voltage pulse operation mode to a non-operating state in which the energy storage device (3) of the high voltage pulse device (1) is discharged and is secured against an unintentional charging.

2. Method according to claim 1, wherein after short-circuiting and/or earthing of the energy storage device (3), no more charging energy is supplied with the charging device (4) to the short-circuited and/or earthed energy storage device (3).

3. Method according to one of the preceding claims, wherein the short-circuiting and/or earthing of the energy storage device (3) is effected by means of a short-circuiting or earthing switch (5), in particular by means of at least two short-circuiting or earthing switches.

4. Method according to claim 3, wherein the contacts of the short-circuiting or earthing switch(es) (5) are arranged in oil, in particular in a common oil-filled container together with the energy storage device (3) .

5. Method according to one of the claims 3 to 4, wherein the switching state of the short-circuiting or earthing switch(es) (5) is monitored by means of one or more sensors (11).

6. Method according to one of the claims 3 to 5, wherein the switching state of the short-circuiting or earthing switch(es) (5) is monitored by means of an optical switch state indicator.

7. Method according to one of the claims 3 to 6, wherein the short-circuiting or earthing switch(es) (5) is or are mechanically latched and/or locked in the closed state.

8. Method according to one of the preceding claims, wherein high voltage pulses with a voltage of more than 50 kV, in particular of more than 100 kV, are generated in the intended high voltage pulse operation mode.

9. Method according to one of the preceding claims, wherein high voltage pulses with a repetition frequency of more than 1 Hz, in particular of more than 5 Hz, are generated in the intended high voltage pulse operation mode.

10. Method according to one of the preceding claims, wherein the short-circuiting and/or earthing of the energy storage device (3) is carried out without using a short-circuiting or earthing resistor.

11. High voltage pulse device (1) for carrying out the method according to one of the preceding claims, comprising:
a) an energy storage device (3) for providing the energy for the high voltage pulses,
b) a charging device (4) for charging the energy storage device (3),
c) one or more short-circuiting or earthing switches (5) for securing the energy storage device (3) against an unintentional charging by short-circuiting and/or earthing, and
d) device control equipment (6, 7) for controlling the device (1),
wherein the device (1) can be controlled with the device control equipment (6, 7) for controlling the device (1) in such a way that it generates a sequence of high voltage pulses in the intended high voltage pulse operation mode and in doing so, the energy storage device (3) is fully discharged at each high voltage pulse and is only recharged for the next high voltage pulse after the end of a charging pause (LP) by supplying charging energy with the charging device (4).

12. Device (1) according to claim 11, wherein the device control equipment (6, 7) for controlling the device (1) is designed in such a way that, in response to a stop command, the device (1) can be transferred to a non-operating state by closing the short-circuiting or earthing switch(es) (5) in a charging pause (LP) following the stop command, in which the energy storage device (3) of the high voltage pulse device (1) is discharged and is protected against an unintentional charging by short-circuiting or earthing, respectively.

13. Device (1) according to claim 12, wherein the device control equipment (6, 7) for controlling the device (1) is designed in such a way that after the energy storage device (3) has been short-circuited and/or earthed, no more charging energy is supplied with the charging device (4) to the short-circuited and/or earthed energy storage device (3).

14. Device (1) according to one of the claims 11 to 13, wherein the device (1) comprises at least two short-circuiting or earthing switches.

15. Device (1) according to one of the claims 11 to 14, wherein the contacts of the short-circuiting or earthing switch(es) (5) are arranged in oil, in particular in a common oil-filled container together with the energy storage device (3).

16. Device (1) according to one of the claims 11 to 15, wherein the device (1) comprises one or more sensors (11) for monitoring the switching state of the short-circuiting or earthing switch(es) (5).

17. Device (1) according to one of the claims 11 to 16, wherein the device (1) comprises an optical switch status indicator for visual monitoring of the switching status of the short-circuiting or earthing switch(es) (5) .

18. Device (1) according to one of the claims 11 to 17, wherein the device (1) comprises equipment for mechanically latching and/or locking the short-circuiting or earthing switch(es) (5) in the closed state.

19. Device (1) according to one of the claims 11 to 18, whereby the short-circuiting or earthing switch(es) (5) is or are closed in the unactuated or actuating energy-free state.

20. Device (1) according to one of the claims 11 to 19, wherein the device (1) is designed in such a way that, when operated in the intended high voltage pulse operation mode, high voltage pulses with a voltage of more than 50 kV, in particular of more than 100 kV can be generated with it.

21. Device (1) according to one of the claims 11 to 20, wherein the device (1) is designed in such a way that high voltage pulses with a repetition frequency of more than 1 Hz, in particular more than 5 Hz, can be generated with it in the intended high voltage pulse operation mode.

22. Use of the high voltage pulse device (1) according to one of the claims 11 to 21 for the fragmenting of preferably poorly electrically conducting material (2) or material composites, in particular of concrete, rock, ore rock or slag, by means of high voltage pulses generated by the device (1).

## Revendications

1. Procédé pour faire fonctionner une installation d'impulsions à haute tension (1), en particulier pour fragmenter et/ou affaiblir un matériau (2) au moyen de décharges à haute tension, avec un accumulateur d'énergie (3) pour fournir l'énergie pour les impulsions à haute tension et un dispositif de charge (4) pour charger l'accumulateur d'énergie (3),
dans lequel une séquence d'impulsions à haute tension est générée avec l'installation (1) dans le fonctionnement par impulsions à haute tension spécifié et l'accumulateur d'énergie (3) est complètement déchargé à chaque impulsion à haute tension et n'est rechargé pour l'impulsion à haute tension suivante qu'après la fin d'une pause de charge (LP) en fournissant de l'énergie de charge avec le dispositif de charge (4),
et dans lequel l'accumulateur d'énergie (3) est court-circuité et/ou mis à la terre dans une pause de charge (LP) lorsque l'installation (1) passe du fonctionnement d'impulsions à haute tension prévu à un état de non fonctionnement dans lequel l'accumulateur d'énergie (3) de l'installation d'impulsions à haute tension (1) est déchargé et est protégé contre une charge involontaire.

2. Procédé selon la revendication 1, dans lequel, après que l'accumulateur d'énergie (3) a été court-circuité et/ou mis à la terre, plus aucune énergie de charge n'est fournie avec le dispositif de charge (4) à l'accumulateur d'énergie (3) court-circuité et/ou mis à la terre.

3. Procédé selon l'une des revendications précédentes, dans lequel la mise en court-circuit et/ou la mise à la terre de l'accumulateur d'énergie (3) s'effectue au moyen d'un interrupteur de court-circuit ou de mise à la terre (5), en particulier au moyen d'au moins deux interrupteurs de court-circuit ou de mise à la terre.

4. Procédé selon la revendication 3, dans lequel les contacts du ou des interrupteurs de court-circuit ou de mise à la terre (5) sont disposés dans de l'huile, en particulier dans un récipient commun rempli d'huile avec l'accumulateur d'énergie (3).

5. Procédé selon l'une des revendications 3 à 4, dans lequel l'état de commutation du ou des interrupteurs de court-circuit ou de mise à la terre (5) est surveillé au moyen d'un ou plusieurs capteurs (11).

6. Procédé selon l'une des revendications 3 à 5, dans lequel l'état de commutation du ou des interrupteurs de court-circuit ou de mise à la terre (5) est surveillé au moyen d'un indicateur optique d'état de commutation.

7. Procédé selon l'une des revendications 3 à 6, dans lequel le ou les interrupteurs de court-circuit ou de mise à la terre (5) est ou sont verrouillés mécaniquement et/ou verrouillés à l'état fermé.

8. Procédé selon l'une des revendications précédentes, dans lequel des impulsions à haute tension d'une tension de plus de 50 kV, en particulier de plus de 100 kV, sont générées dans le fonctionnement d'impulsions à haute tension spécifié.

9. Procédé selon l'une des revendications précédentes, dans lequel des impulsions à haute tension avec une fréquence de séquence de plus de 1 Hz, en particulier de plus de 5 Hz, sont générées dans le fonctionnement d'impulsions à haute tension spécifié.

10. Procédé selon l'une des revendications précédentes, dans lequel le court-circuit et/ou la mise à la terre de l'accumulateur d'énergie (3) est effectué sans utiliser d'une résistance de court-circuit ou de mise à la terre.

11. Installation d'impulsion à haute tension (1) pour la mise en œuvre du procédé selon l'une des revendications précédentes, comprenant :
a) un accumulateur d'énergie (3) pour fournir l'énergie nécessaire aux impulsions à haute tension,
b) un dispositif de charge (4) pour la charge de l'accumulateur d'énergie (3),
c) un ou plusieurs interrupteurs de court-circuit ou de mise à la terre (5) pour protéger l'accumulateur d'énergie (3) contre une charge involontaire par court-circuit et/ou mise à la terre, et
d) des dispositifs (6, 7) de commande de l'installation (1) et
l'installation (1) avec les dispositifs (6, 7) pour la commande de l'installation (1) pouvant être commandée de telle sorte qu'elle génère une séquence d'impulsions à haute tension dans le fonctionnement d'impulsions à haute tension prévu et que, ce faisant, l'accumulateur d'énergie (3) est complètement déchargé à chaque impulsion à haute tension et n'est rechargé pour l'impulsion à haute tension suivante qu'après la fin d'une pause de charge (LP) par l'alimentation avec énergie de charge avec le dispositif de charge (4).

12. Installation (1) selon la revendication 11, les dispositifs (6, 7) pour la commande de l'installation (1) étant conçus de telle sorte que, en réponse à un ordre d'arrêt, l'installation (1) peut être mise dans un état de non-fonctionnement en fermant le ou les interrupteurs de court-circuit ou de mise à la terre (5) dans une pause de charge (LP) suivant l'ordre d'arrêt, état de non-fonctionnement dans lequel l'accumulateur d'énergie (3) de l'installation d'impulsions à haute tension (1) est déchargé et est protégé contre les charges involontaires par un court-circuit ou une mise à la terre.

13. Installation (1) selon la revendication 12, dans lequel les dispositifs (6, 7) pour la commande du système (1) sont conçus de telle sorte qu'après le court-circuit et/ou la mise à la terre de l'accumulateur d'énergie (3), aucune énergie de charge n'est plus fournie avec le dispositif de charge (4) à l'accumulateur d'énergie (3) court-circuité et/ou mis à la terre.

14. Installation (1) selon l'une des revendications 11 à 13, dans lequel l'installation (1) comporte au moins deux interrupteurs de court-circuit ou de mise à la terre.

15. Installation (1) selon l'une des revendications 11 à 14, dans lequel les contacts du ou des interrupteurs de court-circuit ou de mise à la terre (5) sont disposés dans l'huile, en particulier dans un récipient commun rempli d'huile avec le réservoir d'énergie (3).

16. Installation (1) selon l'une des revendications 11 à 15, l'installation (1) ayant un ou plusieurs capteurs (11) pour surveiller l'état de commutation du ou des interrupteurs de court-circuit ou de mise à la terre (5).

17. Installation (1) selon l'une des revendications 11 à 16, dans lequel l'installation (1) comporte un affichage optique de l'état de commutation pour la surveillance visuelle de l'état de commutation du ou des interrupteurs de court-circuit ou de mise à la terre (5).

18. Installation (1) selon l'une des revendications 11 à 17, l'installation (1) ayant des dispositifs pour verrouiller et/ou fermer mécaniquement le ou les interrupteurs de court-circuit ou de mise à la terre (5) à l'état fermé.

19. Installation (1) selon l'une des revendications 11 à 18, dans laquelle le ou les interrupteurs de court-circuit ou de mise à la terre (5) sont fermés à l'état non actionné ou en actionnement sans énergie.

20. Installation (1) selon l'une des revendications 11 à 19, l'installation (1) étant conçu de telle sorte qu'elle permet de générer des impulsions à haute tension d'une tension supérieure à 50 kV, en particulier de plus de 100 kV, dans le fonctionnement par impulsions haute tension spécifié.

21. Installation (1) selon l'une des revendications 11 à 20, l'installation (1) étant conçue de telle sorte que des impulsions à haute tension avec une fréquence de répétition de plus de 1 Hz, en particulier de plus de 5 Hz, peuvent être générées avec lui dans le mode d'impulsions à haute tension spécifié.

22. Utilisation de l'installation d'impulsions à haute tension (1) selon l'une des revendications 11 à 21 pour la fragmentation de matériaux (2) ou de matériaux composites, en particulier de matériaux à faible conductivité électrique, notamment le béton, la roche, le minerai ou les scories, au moyen d'impulsions à haute tension générées par l'installation (1) .
